Europäisches Patentamt

European Patent Office

Office européen des brevets

(11) Veröffentlichungsnummer: **0 214 526 B1**

(12) **EUROPÄISCHE PATENTSCHRIFT**

(45) Veröffentlichungstag der Patentschrift: 26.10.94

(51) Int. Cl.5: **C08F 8/00**, C08F 232/00

(21) Anmeldenummer: **86111540.0**

(22) Anmeldetag: **20.08.86**

(54) **Modifiziertes Cyclopentadienharz, Verfahren zu dessen Herstellung und Verwendung.**

(30) Priorität: **31.08.85 DE 3531242**

(43) Veröffentlichungstag der Anmeldung:
**18.03.87 Patentblatt 87/12**

(45) Bekanntmachung des Hinweises auf die
Patenterteilung:
**26.10.94 Patentblatt 94/43**

(84) Benannte Vertragsstaaten:
**AT BE CH DE FR GB IT LI NL SE**

(56) Entgegenhaltungen:
**DE-A- 2 658 857**
**FR-A- 2 154 216**

(73) Patentinhaber: **HOECHST AKTIENGESELL-
SCHAFT**

**D-65926 Frankfurt (DE)**

(72) Erfinder: **Werner, Gerhard, Dr.
Zum Talblick 50
D-6246 Glashütten Taunus (DE)**

**Beschreibung**

Es ist bekannt, Cyclopentadien oder dessen Polymere mit Tallöl bei erhöhter Temperatur umzusetzen und das so erhaltene Produkt anschließend mit einem mehrwertigen Alkohol zu verestern (US-A-2 598 424). Diese Produkte werden zur Herstellung von Lacken eingesetzt. Die Verwendung in Druckfarben wurde jedoch in dieser Schrift nicht erwähnt.

Andere Druckschriften führen zu Umsetzungen von (Di)cyclopentadienharzen mit Phenolformaldehydharzen, ungesättigte Carbonsäuren, olefinisch ungesättigten Kohlenwasserstoffen und/oder Ölen zu Harzen an, die in der Druckindustrie Verwendung finden. Bei diesen Verfahren handelt es sich um mehrstufige Verfahren, um zu den gewünschten Produkten zu gelangen.

So beschreibt z.B. die DE-AS 22 46 283 die Umsetzung eines durch Polymerisation hergestellten Kohlenwasserstoffharzes aus Cyclopentadien, Methylcyclopentadien, oder deren Polymeren una gegebenenfalls anderen ungesättigten Kohlenwasserstoffen mit ungesättigten Fettsäuren, z.B. Tallölfettsäure, in Gegenwart von Metallsalzen und gegebenenfalls Phenolen, z.B. in Form eines substituierten Phenols, Resols oder der entsprechenden Benzylätherverbindung. Bei dieser Umsetzung ist es aber möglich, daß die Phenolkomponenten nicht gleichmäßig bzw. in manchen Fällen nicht quantitativ eingebaut werden, so daß ein inhomogenes Produkt entstehen kann. Außerdem werden die Reaktionskomponenten an Polymerisate angelagert und ergeben andere Produkte als z.B. bei einem Eintopfverfahren.

Eine weitere Druckschrift (DE-OS 24 14 558) beschreibt die Herstellung eines polare Gruppen und ungesättigte Bindungen enthaltenden thermoplastischen Harzes zur Anwendung in Drucktinten aus einer Dreikomponentenmischung bestehend aus einer fünfgliedrigen Ringverbindung, die ungesättigte konjugierte Doppelbindungen enthält, einer mono- oder polyungesättigten Carbonsäure mit 3 bis 32 C-Atomen oder deren Anhydrid und einem einwertigen gesättigten oder ungesättigten Alkohol. Dieses Harz kann nach seiner Herstellung mit einem Phenol-Formaldehydkondensationsprodukt mofidiziert werden. Als typische Beispiele für die eingesetzte Carbonsäurekomponente sind genannt Acrylsäure, Methacrylsäure, Maleinsäure, ihr Anhydrid, Tetrahydrophthalsäure und ihr Anhydrid, Fumarsäure, Citraconsäure, Itaconsäure oder deren Mischungen.

Der Einsatz von Fettsäuren für diese Reaktionskomponente wird somit nicht vorgezeichnet. Es wird an anderer Stelle aber angeführt, daß das erhaltene Harz ebenso wie mit Phenolharzen auch mit einem Gemisch eines mehrwertigen Alkohols und einer Fettsäure und/oder Fetten und Ölen mofidiziert werden kann. Die Zusammensetzung der Harze und die Verfahrensweise ihrer Herstellung kann somit nicht mit der der vorliegenden Erfindung verglichen werden.

Es ist ferner bekannt (US-A-4,433,100), synthetische Harze für Druckfarbenmischungen herzustellen, bei dem ein überwiegender Anteil Dicyclopentadien mit geringeren Anteilen mindestens eines ungesättigten Kohlenwasserstoffes, mindestens einer Verbindung, die Fettsäure oder Naturharzsäure enthält und gegebenenfalls mindestens einer äthylenisch ungesättigten niederen aliphatischen Dicarbonsäure umgesetzt wird. Die erhaltenen Produkte entsprechen jedoch nicht allen Anforderungen, die an sie gestellt werden. Besonders die Leinölverträglichkeit ist deutlich zurückstehend. Durch erhöhten Einsatz von Maleinsäureanhydrid kann man diese zwar verbessern, jedoch erfolgt in diesem Falle dann eine Verschlechterung der Mineralölverträglichkeit.

Es bestand daher die Aufgabe, die Schwierigkeiten der bekannten Produkte bzw. der bekannten Verfahren zu überwinden und neue Harze zur Verfügung zu stellen, die diese Nachteile nicht aufweisen.

Gegenstand der Erfindung ist ein modifiziertes Cyclopentadienharz, das aus a) 40 bis 90 Gew.-% an Einheiten von monomerem oder oligomerem Cyclopentadien und/oder deren Alkylsubstitutionsprodukten, b) 1 bis 30 Gew.-% Resolen, c) 5 bis 40 Gew.-% nicht-aromatischen, ungesättigten Monocarbonsäuren mit 8 bis 26 C-Atomen, d) 0,5 bis 10 Gew.-% $\alpha,\beta$-olefinisch ungesättigten Dicarbonsäureeinheiten, e) 0 bis 20 Gew.-% anderen copolymerisierbaren Monomeren und/oder f) 0 bis 3 Gew.-% einer Metallverbindung aus den Gruppen IIa, IIb oder IIIa des Periodischen Systems besteht, wobei die Summe der Komponenten a) bis f) stets 100 Gew.-% beträgt, und durch einstufige thermische Polymerisation aus einem Gemisch von a) 40 - 90 Gew.-% monomerem oder oligomerem Cyclopentadien und/oder deren Alkylsubstitutionsprodukten und/oder deren bei Raumtemperatur flüssigen, noch nicht harzartigen Oligomeren mit b) 1 bis 30 Gew.-% Resolen, c) 5 bis 40 Gew.-% nicht-aromatischen ungesättigten Monocarbonsäuren mit 8 bis 26 C-Atomen, d) 0,5 bis 10 Gew.-% $\alpha,\beta$-olefinisch ungesättigten Dicarbonsäuren, e) 0 bis 20 Gew.-% anderen copolymerisierbaren Monomeren und/oder f) 0 bis 3 Gew.-% einer Metallverbindung aus den Gruppen IIa, IIb oder IIIa des periodischen Systems, wobei die Summe der Komponenten a) bis f) stets 100 Gew.-% ist, bei einer Temperatur von 230 bis 290 °C hergestellt wird.

Die Erfindung umfaßt auch ein Verfahren zur Herstellung eines modifizierten Cyclopentadienharzes, bei dem die Komponenten a) bis f) bei einer Temperatur von 230 bis 300, vorzugsweise 255 bis 280 °C

2

umgesetzt werden. Dieses Verfahren hat den Vorteil, daß vorab keine Homo- oder Copolymerisation der Komponente a) vorgenommen wird, sondern daß die Polymerisation gleichzeitig mit dem Einbau der modifizierenden Komponenten b) bis e) erfolgen kann, wodurch infolge des Eintopf-Verfahrens nicht nur eine wesentliche Arbeits- und Energieersparnis erzielt wird, sondern überraschenderweise auch ausgezeichnete Eigenschaften des Produktes erhalten werden. Die Reaktion verläuft im allgemeinen innerhalb 1 bis 2 Stunden bei den oben angeführten Reaktionstemperaturen, kann gegebenenfalls aber auch mehrere Stunden, z.B. bis zu 24 Stunden dauern. Hierbei läßt sich vorteilhafterweise die freiwerdende Polymerisationswärme für die Weiterführung der Reaktion nutzen.

Zweckmäßig ist die Komponente a) in einem Anteil von mindestens 40, vorzugsweise mindestens 55, insbesondere 55 bis 80 Gew.-% in das Reaktionsprodukt eingebaut.

Der Anteil des Resols b) beträgt im allgemeinen 1 bis 30, vorzugsweise 3 bis 10 Gew.-% und der der Komponente c) im allgemeinen 5 bis 40, vorzugsweise 10 bis 25 Gew.-%.

Der bevorzugte Bereich der ungesättigten Dicarbonsäureeinheiten d) beträgt 0,5 bis 5, insbesondere 0,5 bis 3 Gew.-% bei Harzen für den Offset-Druck, jedoch bei Harzen für den Tiefdruck 5 - 10 Gew.-%.

Die Komponente e) wird in dem bevorzugten Bereich von 3 bis 7 Gew.-% eingesetzt.

Die Metallverbindung f) besitzt einen vorzugsweisen Bereich von 0,5 bis 1,5 Gew.-%.

Die genannten Prozentanteile beziehen sich immer auf die Summe der Komponenten a) bis f), die stets 100 Gew.-%. beträgt. Je nach Wunsch läßt sich mit einer Variation der Komponentenanteile der Schmelzpunkt, die Verträglichkeit und die Viskosität des Endproduktes auf den gewünschten Verwendungszweck abstimmen.

Geeignete Cyclopentadienverbindungen a) sind beispielsweise Cyclopentadien, Methylcyclopentadien sowie deren Oligomeren wie Di-, Tricyclopentadien, Dimethylcyclopentadien, Methyl- und Dimethyldicyclopentadien, jeweils einzeln oder im Gemisch, ferner technisches Dicyclopentadien mit einem Gehalt von mindestens 60, vorzugsweise 70 Gew.-% Dicyclopentadien und andere darin enthaltene ungesättigte Kohlenwasserstoffe des $C_4$- und $C_5$-Schnittes, die im allgemeinen als Dimere vorliegen, beispielsweise Dimere des Cyclopentadiens oder Methylcyclopentadiens mit Isopren, Piperylen und/oder Butadien.

Im allgemeinen wird man hierbei die zu polymerisierenden Ausgangskohlenwasserstoffe so wählen, daß der Anteil an Cyclopentadienverbindungen mindestens 50, vorzugsweise mindestens 70 Gew.-% der Kohlenwasserstoffmonomeren ausmacht.

Die Resolkomponente b) stellt ein Kondensationsprodukt aus einem Phenol und Formaldehyd dar und wird als Vorkondensat bezeichnet. Im allgemeinen wird das Vorkondensat hergestellt durch Umsetzung eines Phenols mit Formaldehyd in Gegenwart eines alkalischen Katalysators, z.B. einem Hydroxyd des Natriums, Kaliums, Bariums, Magnesiums oder Calciums, bei einer Temperatur von 50 bis 100°C innerhalb 3 bis 5 Stunden. Das so hergestellte Vorkondensat enthält im allgemeinen hauptsächlich Dimethylolphenol, dessen oligomere und höherkondensierte Resole. In einigen Fällen enthält es außerdem (Alkyl)-methylolhydroxybenzyläther. Als Phenol können beispielsweise Phenol, die verschiedenen Kresole, Butylphenol, Amylphenol, Octylphenyl, Phenylphenol und Bisphenole verwendet werden, vorzugsweise werden die p-Alkylphenole wie p-t-Butylphenol, p-t-Amylphenol oder p-Octylphenol und Nonylphenol eingesetzt.

Als Fettsäurekomponente c), die einfach oder mehrfach ungesättigt sein kann, eignen sich beispielsweise höhere Fettsäuren mit 8 bis 26 C-Atomen oder deren Dimere, z.B. Soja-, Leinölfettsäure, vorzugsweise jedoch Tallölfettsäure und/oder Naturharzsäuren z.B. Kolophonium oder Tallharze, jeweils einzeln oder im Gemisch.

Die Komponente d) wird im allgemeinen in Form von Maleinsäure oder deren Anhydrid eingesetzt. Es ist aber auch möglich, andere Polycarbonsäureeinheiten wie Furmarsäure, Itaconsäure, Mesaconsäure, Citraconsäure, 1,2-Tetrahydrophthalsäure und/oder deren Anhydride, sofern diese existieren, jeweils einzeln oder im Gemisch zu verwenden.

Geeignete copolymerisierbare Monomere e) sind z.B. Styrol, $\alpha$-Methylstyrol, die verschiedenen Vinyltoluole, Ester der Acryl- oder Methacrylsäure wie Methyl(meth)acrylat, Butyl (meth)acrylat, Octyl(meth)acrylat. Außerdem eignen sich Vinylverbindungen z.B. Vinylester wie Vinylacetat oder Vinyläther. Nach einer bevorzugten Ausführungsform werden als Komponente a) Dicyclopentadien und als Komponente e) Styrol eingesetzt.

Als Metallverbindungen f) werden Verbindungen von Metallen aus den Gruppen IIa, IIb und IIIa des Periodischen Systems verwendet, die nicht stark gefärbt sind und in Kombination mit dem Petroleumharz und ungesättigten Fettsäuren keine stark gefärbten Produkte ergeben. Es werden Metalloxyde oder Carbonsäuresalze von Metallen bevorzugt. Die Carbonsäuren, von denen das Metallsalz abgeleitet ist, können z.B. gesättigte oder ungesättigte Fettsäuren sein. Geeignete Metallverbindungen sind u.a. Oxyde und Hydroxyde, des Magnesiums, Calciums, Zinks und Aluminiums, sowie deren Salze wie Calcium- und Zinkaccetat, Aluminiumoleat, Magnesiumstearat und Magnesium-oleat.

3

EP 0 214 526 B1

Obwohl das Verfahren kontinuierlich durchgeführt werden kann, ist es aus verfahrensökonomischen Gründen ratsam, die Polymerisation, den Einbau der ungesättigten Dicarbonsäureeinheit und der Phenolkomponente in einer Stufe vorzunehmen. Diese Reaktion verläuft im allgemeinen sehr glatt, wobei man Produkte mit ausgezeichneter Ausbeute erhält. In manchen Fällen kann es jedoch auch erwünscht sein, daß man die Komponenten a) bis f) in einem Eintopf-Verfahren reagieren läßt und anschließend zur genaueren Einstellung der gewünschten Eigenschaften und Kenndaten noch geringfügige Mengen einzelner Komponenten nachträglich zugibt und umsetzt. Hierzu gehören z.B. auch Polyhydroxyalkohole wie Äthylenglykol, Diäthylenglykol, Propylenglykol, Neopentylglykol, Glycerin, Trimethyloläthan, Trimethylolpropan, Pentaerythrit und Dipentaerythrit und besonders bevorzugt Tri- und höhere Hydroxyalkohole. Der Polyhydroxyalkohol kann natürlich auch in Form eines Gemisches verwendet werden. Hierbei kann man beispielsweise die Eintopf-Reaktion unter erhöhtem Druck und die weitere Reaktion gegebenenfalls unter Normaldruck vornehmen. Die einstufige Umsetzung wird man jedoch bevorzugt durchführen.

Die erfindungsgemäßen Reaktionsprodukte können ein Molekulargewicht von 600 bis 5000, vorzugsweise 800 bis 2000 aufweisen. Die Schmelztemperaturen können zwischen 50 und 250, vorzugsweise 90 und 150°C liegen.

Die erfindungsgemäßen Produkte weisen gute Verträglichkeit mit Alkydharzen und mit Lösungsmitteln wie Mineralölen und trocknenden Ölen auf. Besonders überraschend ist ihre ausgezeichnete Lagerbeständigkeit, die mehrere Monate betragen kann. Die Produkte besitzen auch Vorteile in ihren drucktechnischen Eigenschaften.

Aufgrund der guten drucktechnischen Eigenschaften kann das erfindungsgemäße Cyclopentadienharz als Bindemittel für Druckfarben, insbesondere für Offsetdruck, vor allem für Rollen-Offsetdruck und Tiefdruck verwendet werden. Hierbei treten der hohe Glanz, die rasche Trocknung, die rasche Lösungsmittelabgabe sowie die gute Gelierung mit Aluminium-Verbindungen als besonders günstige Eigenschaften hervor.

In den nachstehenden Beispielen der Tabellen bedeutet T jeweils Gewichtsteile und % jeweils Gewichtsprozent.

Beispiel 1 - 12

In einem Rührautoklaven wurden die in der Tabelle 1 angeführten, den einzelnen Beispielen entsprechenden Komponenten a) bis f) in den angegebenen Mengenverhältnissen unter Inertgas vorgelegt. Anschließend wurde der Inhalt auf 275°C erwärmt und das Gemisch 8 Stunden bei dieser Temperatur gehalten. Der entstandene Überdruck wurde dann auf Normaldruck reduziert, wobei gleichzeitig niedrigsiedende Bestandteile abdestillierten und der Autoklaveninhalt auf Raumtemperatur abgekühlt. Die Ausbeute liegt im allgemeinen über 90%. Die Kenndaten der nach den Beispielen 1 bis 14 hergestellten Harze sind aus der nachstehenden Tabelle 1a ersichtlich.

Erklärung zu Tabelle 1a

Die Mineralölverträglichkeit wird bestimmt, indem man die Substanz in einem Mineralöl der Firma J. Haltermann, Hamburg unter der Bezeichnung "PKWF 4/7" löst.

Die Leinölverträglichkeit gibt die Leinölaufnahme in Gewichtsprozent an, die eine 50 %ige Lösung in "PKWF 4/7" zeigt, bis eine Trübung eintritt.

Die thermische Stabilität wurde bei den geprüften Beispielen durch sechstündige Wärmelagerung bei 230°C unter Stickstoff-Atmosphäre ermittelt. Die Viskositäten wurden jeweils in 50 %iger Toluollösung am Beginn und nach 6 Stunden Lagerung gemessen.

4

Tabelle 1     Zusammensetzung

| Beispiel | a DCPD(80 %ig) | b Phenolharze | c Naturharzsäuren Fettsäuren | d M S A Dicarbonsäure | e Comonomere | f Salze |
|---|---|---|---|---|---|---|
| 1 | 65 T | 5 T t.-butyl-phenolresol | 24 T Tallölfett-säure | 2 T | 5 T Styrol | - |
| 2 | 64 | 5 " | 25 " | 1 | 5 " | - |
| 3 | 64 | 5 " | 25 Kolophonium | 1 | 5 " | - |
| 4 | 55 | 5 " | 35 " | 2 | 3 " | - |
| 5 | 48 | 5 " | 45 " | 2 | - | - |
| 6 | 64 | 9 " | 13 Tallölfetts. | 2 | 12 " | - |
| 7 | 64 | 5 " | 25 " | 1 | 5 Vinylacetat | - |
| 8 | 64 | 5 Nonylphenol | 25 Tallharz | 1 | 5 Styrol | - |
| 9 | 67 | 9 Octylphenol | 13 Tallölfetts. | 2 | 9 Styrol | - |

EP 0 214 526 B1

Tabelle 1 (Fortsetzung)    Zusammensetzung

| Beispiel | a<br>DCPD(80 %ig) | b<br>Phenolharze | c<br>Naturharzsäuren<br>Fettsäuren | d<br>M S A<br>Dicarbonsäure | e<br>Comonomere | f<br>Salze |
|---|---|---|---|---|---|---|
| 10 (Vergl.) | 68 | – | 26 Tallharz | 1 | 5 Styrol | – |
| 11 (Vergl.) | 72 | – | 28  " | – | – | – |
| 12 (Vergl.) | 71 | – | 28  " | 1 | – | – |

EP 0 214 526 B1

Tabelle 1a    Eigenschaften

| Bsp. | Schmelztemp. °C | Viskosität 50% i.Toluol mPa.s | Säurezahl | Verträglichkeit | | thermische Stabilität 50% i.Toluol mPa.s | |
|---|---|---|---|---|---|---|---|
| | | | | Mineralöl | Leinöl | Beginn | 6 Stunden |
| 1 | 110 | 116 | 28 | 1:4 | 110 | 116 | 125 |
| 2 | 150 | 88 | 23 | 1:3 | 100 | – | – |
| 3 | 162 | 139 | 26 | 1:3 | 80 | – | – |
| 4 | 128 | 45 | 41 | 1:5 | 100 | – | – |
| 5 | 115 | 26 | 57 | 1:10 | 100 | – | – |
| 6 | 150 | 123 | 20 | 1:2 | 80 | – | – |
| 7 | 110 | 90 | 28 | 1:5 | 100 | – | – |
| 8 | 145 | 84 | 25 | 1:5 | 100 | 84 | 110 |
| 9 | 136 | 219 | 20 | 1:3 | 70 | – | – |
| 10(V) | 155 | 87 | 25 | 1:3 | 40 | 87 | 600 |
| 11(V) | 155 | 95 | 19 | 1:4 | 50 | 95 | 2200 |
| 12(V) | 156 | 153 | 24 | 1:2 | 40 | 153 | 6014 |

Diskusion der Ergebnisse

Der Vergleich der Beispiele 2 und 10 V zeigt, daß durch den Einsatz der Resolkomponente b) die Leinölverträglichkeit deutlich besser ist. Variiert man die Phenolkomponente im Resolharz durch Verlängerung der Alkylkette, erhält man nicht nur eine erhebliche Verbesserung der Leinölverträglichkeit, sondern auch der Löslichkeit in Mineralöl.

Die Vorteile der erfindungsgemäßen Harze im Vergleich zu phenolharzfreien Harzen zeigen sich insbesonders auch bei der thermischen Stabilität und damit der Lagerbeständigkeit. Der Einbau der Phenolkomponente bewirkt deutlich besere Beständigkeiten.

Beim Arbeiten unter Fabrikationsbedingungen ist die thermische Stabilität beim Austragen der Harzschmelze nach Reaktionsende wichtig. Die Schmelz- und Lösungsviskosität der Harze soll dabei über Stunden möglichst konstant bleiben, um gleichmäßige Produkte zu erhalten. Der Zusatz von hochsiedenden Mineralölen nach beendeter Reaktion zur Herabsetzung der Schmelzviskosität und Auslauftemperatur ist zumeist unerwünscht und bei den erfindungsgemäßen Harzen nicht erforderlich. Während bei den erfindungsgemäß hergestellten Harzen die Viskosität in engen Grenzen konstant bleibt, zeigen die Vergleichsversuche einen erheblichen Viskositätsanstieg und sind somit unter Produktionsbedingungen schwer zu handhaben.

**Patentansprüche**

1. Modifiziertes Cyclopentadienharz, das aus a) 40 bis 90 Gew.-% an Einheiten von monomerem oder oligomerem Cyclopentadien und/oder deren Alkylsubstitutionsprodukten, b) 1 bis 30 Gew.-% Resolen, c) 5 bis 40 Gew.-% nicht-aromatischen, ungesättigten Monocarbonsäuren mit 8 bis 26 C-Atomen, d) 0,5 bis 10 Gew.-% $\alpha,\beta$-olefinisch ungesättigten Dicarbonsäureeinheiten, e) 0 bis 20 Gew.-% anderen copolymerisierbaren Monomeren und/oder f) 0 bis 3 Gew.-% einer Metallverbindung aus den Gruppen IIa, IIb) oder IIIa des periodischen Systems besteht, wobei die Summe der Komponenten a) bis f) stets 100 Gew.-% beträgt, und durch einstufige thermische Polymerisation aus einem Gemisch von a) 40 - 90 Gew.-% monomerem oder oligomerem Cyclopentadien und/oder deren Alkylsubstitutionsprodukten und/oder deren bei Raumtemperatur flüssigen, noch nicht harzartigen Oligomeren mit b) 1 bis 30 Gew.-% Resolen, c) 5 bis 40 Gew.-% nicht-aromatischen ungesättigten Monocarbonsäuren mit 8 bis 26 C-Atomen, d) 0,5 bis 10 Gew.-% $\alpha,\beta$-olefinisch ungesättigten Dicarbonsäuren, e) 0 bis 20 Gew.-% anderen copolymerisierbaren Monomeren und/oder f) 0 bis 3 Gew.-% einer Metallverbindung aus den Gruppen IIa, IIb oder IIIa des periodischen Systems, wobei die Summe der Komponenten a) bis f) stets 100 Gew.-% ist, bei einer Temperatur von 230 bis 290 °C hergestellt wird.

2. Ausführungsform nach Anspruch 1, dadurch gekennzeichnet, daß die Polymerisation bei einer Temperatur von 255 bis 285 °C durchgeführt wird.

3. Ausführungsform nach Anspruch 1 oder 2, dadurch gekennzeichnet, daß die Alkylsubstitutionsprodukte der Komponente a) Methyl- und/oder Dimethylcyclopentadien sind.

4. Ausführungsform nach einem oder mehreren der Ansprüche 1 bis 3, dadurch gekennzeichnet, daß 55 bis 80 Gew.-% der Komponente a), 3 bis 10 Gew.-% der Komponente b) und 10 bis 25 Gew.-% der Komponente c), wobei die Summe der Komponenten a) bis f) stets 100 Gew.-% ist, eingesetzt werden.

5. Ausführungsform nach einem oder mehreren der Ansprüche 1 bis 4, dadurch gekennzeichnet, daß 0,5 bis 10 Gew.-% der Komponente d), 3 bis 7 Gew.-% der Komponente e) und 0,5 bis 1,5 Gew.-% der Komponente f) eingesetzt werden.

6. Ausführungsform nach einem oder mehreren der Ansprüche 1, 2, 4 und 5, dadurch gekennzeichnet, daß die Komponente a) Dicyclopentadien und die Komponente e) Styrol ist.

7. Ausführungsform nach einem oder mehreren der Ansprüche 1 bis 6, dadurch gekennzeichnet, daß die Komponente c) Tallölfettsäure ist.

8. Ausführungsform nach einem oder mehreren der Ansprüche 1 bis 6, dadurch gekennzeichnet, daß die Komponente c) Kolophonium ist.

9. Ausführungsform nach einem oder mehreren der Ansprüche 1 bis 8, dadurch gekennzeichnet, daß die Komponente b) ein Resol, dessen Phenolkomponente zumindestens 60 Gew.-% aus Alkylphenol und zum Rest aus Phenol besteht, ist.

10. Ausführungsform nach Anspruch 9, dadurch gekennzeichnet, daß das Resol ein Alkylphenol-Formaldehydharz mit 1 - 12, vorzugsweise 4 - 9 Kohlenstoffatomen in der Alkylgruppe ist.

11. Ausführungsform nach einem oder mehreren der Ansprüche 1 bis 10, dadurch gekennzeichnet, daß die Komponente d) Maleinsäureanhydrid ist.

**12.** Ausführungsform nach einem oder mehreren der Ansprüche 1 bis 11, dadurch gekennzeichnet, daß die Komponente f) ein Oxyd, Hydroxyd oder Salz des Magnesiums, Calciums, oder Zinks ist.

**13.** Ausführungsform nach einem oder mehreren der Ansprüche 1 bis 12, dadurch gekennzeichnet, daß das Cyclopentadienharz ein Molekulargewicht von 600 bis 5000, vorzugsweise 800 bis 2000 aufweist und Schmelztemperaturen zwischen 50 und 250, vorzugsweise 90 bis 150 °C besitzt.

**14.** Verwendung der modifizierten Cyclopentadienharze gemäß Anspruch 1 als Bindemittel für Druckfarben.

**15.** Verwendung nach Anspruch 14 für Tiefdruckfarben.

**Claims**

**1.** A modified cyclopentadiene resin which comprises a) 40 to 90% by weight of units of monomeric or oligomeric cyclopentadiene and/or its alkyl-substitution products, b) 1 to 30% by weight of resols, c) 5 to 40% by weight of non-aromatic, unsaturated monocarboxylic acids having 8 to 26 carbon atoms, d) 0.5 to 10% by weight of $\alpha,\beta$-olefinically unsaturated dicarboxylic acid units, e) 0 to 20% by weight of other copolymerizable monomers and/or f) 0 to 3% by weight of a metal compound from the groups IIa, IIb or IIIa of the periodic system, the sum of the components a) to f) always being 100% by weight, and is prepared by single-stage thermal polymerization of a mixture of a) 40-90% by weight of monomeric or oligomeric cyclopentadiene and/or its alkyl-substitution products and/or its oligomers which are liquid at room temperature but not yet resinous with b) 1 to 30% by weight of resols, c) 5 to 40% by weight of non-aromatic, unsaturated monocarboxylic acids having 8 to 26 carbon atoms, d) 0.5 to 10% by weight of $\alpha,\beta$-olefinically unsaturated dicarboxylic acids, e) 0 to 20% by weight of other copolymerizable monomers and/or f) 0 to 3% by weight of a metal compound from the groups IIa, IIb or IIIa of the periodic system, the sum of the components a) to f) always being 100% by weight, at a temperature of 230 to 290 °C.

**2.** An embodiment as claimed in claim 1, wherein the polymerization is carried out at a temperature from 255 to 285 °C.

**3.** An embodiment as claimed in claim 1 or 2, wherein the alkyl-substitution products of the component a) are methylcyclopentadiene and/or dimethylcyclopentadiene.

**4.** An embodiment as claimed in one or more of claims 1 to 3, wherein 55 to 80% by weight of the component a), 3 to 10% by weight of the component b) and 10 to 25% by weight of the component c) are employed, the sum of the components a) to f) always being 100% by weight.

**5.** An embodiment as claimed in one or more of claims 1 to 4, wherein 0.5 to 10% by weight of the component d), 3 to 7% by weight of the component e) and 0.5 to 1.5% by weight of the component f) are employed.

**6.** An embodiment as claimed in one or more of claims 1, 2, 4 and 5 wherein the component a) is dicyclopentadiene and the component e) is styrene.

**7.** An embodiment as claimed in one or more of claims 1 to 6, wherein the component c) is tall oil fatty acid.

**8.** An embodiment as claimed in one or more of claims 1 to 6, wherein the component c) is colophonium.

**9.** An embodiment as claimed in one or more of claims 1 to 8, wherein the component b) is a resol, the phenol component of which comprises at least 60% by weight of alkylphenol and the remainder of phenol.

**10.** An embodiment as claimed in claim 9, wherein the resol is an alkylphenol formaldehyde resin having 1-12, preferably 4-9, carbon atoms in the alkyl group.

**11.** An embodiment as claimed in one or more of claims 1 to 10, wherein the component d) is maleic anhydride.

**12.** An embodiment as claimed in one or more of claims 1 to 11, wherein the component f) is an oxide, hydroxide or salt of magnesium, calcium or zinc.

**13.** An embodiment as claimed in one or more of claims 1 to 12, wherein the cyclopentadiene resin has a molecular weight from 600 to 5,000, preferably 800 to 2,000, and melting points between 50 and 250, preferably 90 to 150°C.

**14.** The use of the modified cyclopentadiene resins as claimed in claim 1 as binders for printing inks.

**15.** The use as claimed in claim 14 for gravure printing inks.

**Revendications**

**1.** Résine de cyclopentadiène modifiée, qui est constituée de
a) de 40 à 90 % en poids d'unités de cyclopentadiène monomère ou oligomère et/ou de ses produits de substitution alkyles,
b) de 1 à 30 % en poids de résols,
c) de 5 à 40 % en poids d'acides monocarboxyliques insaturés non aromatiques avec de 8 à 26 atomes de C,
d) de 0,5 à 10 % en poids d'unités d'acides dicarboxyliques insaturés oléfiniques en $\alpha$, $\beta$,
e) de 0 à 20 % en poids d'autres monomères copolymérisables et/ou
f) de 0 à 3 % en poids d'un composé métallique choisi dans les groupes IIa, IIb, ou IIIa du système périodique,
la somme des composants a) à f) représentant toujours 100 % en poids, celle résine étant produite par une polymérisation thermique en une étape d'un mélange de :
a) de 40 à 90 % en poids de cyclopentadiène monomère ou oligomère et/ou de ses produits de substitution alkyles et/ou de ses oligomères liquides à la température ambiante, non encore résineux, avec
b) de 1 à 30 % en poids de résols,
c) de 5 à 40 % en poids d'acides monocarboxyliques insaturés non aromatiques avec de 8 à 26 atomes de C,
d) de 0,5 à 10 % en poids d'acides dicarboxyliques insaturés oléfiniques en $\alpha$, $\beta$,
e) de 0 à 20 % en poids d'autres monomères copolymérisables et/ou
f) de 0 à 3 % en poids d'un composé métallique choisi dans les groupes IIa, IIb ou IIIa du système périodique, la somme des composants a) à f) représentant toujours 100 % en poids, à une température de 230 à 290° C.

**2.** Mode de réalisation selon la revendication 1, caractérisé en ce que la polymérisation est effectuée à une température de 255 à 285°C.

**3.** Mode de réalisation selon la revendication 1 ou 2, caractérisé en ce que les produits de substitutions alkyles du composant a) sont le méthyl et/ou diméthylcyclopentadiène.

**4.** Mode de réalisation selon une ou plusieurs des revendications 1 à 3, caractérisé en ce que l'on utilise de 55 à 80 % en poids du composant a) de 3 à 10 % en poids du composant b) et de 10 à 25 % en poids du composant c), la somme des composants a) à f) représentant toujours 100 % en poids.

**5.** Mode de réalisation selon une ou plusieurs des revendications 1 à 4, caractérisé en ce que l'on utilise de 0,5 à 10 % en poids du composant d), de 3 à 7 % en poids du composant e) et de 0,5 à 1,5 % en poids du composant f).

**6.** Mode de réalisation selon une ou plusieurs des revendications 1, 2, 4 et 5, caractérisé en ce que le composant a) est le dicyclopentadiène et le composant e) est le styrène.

7. Mode de réalisation selon une ou plusieurs des revendications 1 à 6, caractérisé en ce que le composant c) est l'acide gras de tallol.

8. Mode de réalisation selon une ou plusieurs des revendications 1 à 6, caractérisé en ce que le composant c) est la colophane.

9. Mode de réalisation selon une ou plusieurs des revendications 1 à 8, caractérisé en ce que le composant b) est un résol, dont le composant phénol est constitué d'au moins 60 % en poids d'alkylphénol et le reste de phénol.

10. Mode de réalisation selon la revendication 9, caractérisé en ce que le résol est une résine alkylphénol-formaldéhyde ayant de 1 à 12, de préférence de 4 à 9 atomes de carbone dans le groupe alkyle.

11. Mode de réalisation selon une ou plusieurs des revendications 1 à 10, caractérisé en ce que le composant d) est l'anhydride de l'acide maléique.

12. Mode de réalisation selon une ou plusieurs des revendications 1 à 11, caractérisé en ce que le composant f) est un oxyde, un hydroxyde ou un sel du magnésium, du calcium ou du zinc.

13. Mode de réalisation selon une ou plusieurs des revendications 1 à 12, caractérisé en ce que la résine de cyclopentadiène a un poids moléculaire de 600 à 5000, de préférence de 800 à 2000, et la température de fusion est entre 50 et 250, de préférence de 90 à 150°C.

14. Utilisation des résines modifiées de cyclopentadiène selon la revendication 1 comme agent liant pour les encres d'imprimerie.

15. Utilisation selon la revendication 14 pour des encres d'impression par héliogravure.